Europäisches Patentamt

European Patent Office

Office européen des brevets

(19)

(11) EP 0 829 990 B1

(12) EUROPÄISCHE PATENTSCHRIFT

(45) Veröffentlichungstag und Bekanntmachung des Hinweises auf die Patenterteilung:
**09.04.2003 Patentblatt 2003/15**

(51) Int Cl.⁷: **H04L 27/38**

(21) Anmeldenummer: **97113420.0**

(22) Anmeldetag: **04.08.1997**

(54) **Verfahren zur Demodulation von höherstufigen MQAM-Signalen ohne Kenntnis der übertragenen Symbole**

Method for demodulating high-level M-QAM signals without knowledge of the transmitted symbols

Procédé de démodulation de signaux M-QAM à haut niveau sans connaissance de données transmises

(84) Benannte Vertragsstaaten:
**DE FR GB**

(30) Priorität: **31.08.1996 DE 19635444**

(43) Veröffentlichungstag der Anmeldung:
**18.03.1998 Patentblatt 1998/12**

(73) Patentinhaber: **Rohde & Schwarz GmbH & Co. KG D-81671 München (DE)**

(72) Erfinder: **Schmidt, Kurt, Dr. 85567 Grafing (DE)**

(74) Vertreter: **Körfer, Thomas, Dipl.-Phys. et al Mitscherlich & Partner, Patent- und Rechtsanwälte, Sonnenstrasse 33 80331 München (DE)**

(56) Entgegenhaltungen:
**EP-A- 0 579 100**      **DE-C- 4 101 802**

• **EFSTATHIOU D ET AL: "A COMPARISON STUDY OF THE ESTIMATION PERIOD OF CARRIER PHASE AND AMPLITUDE GAIN ERROR FOR 16-ARY QAM RAYLEIGH FADED BURST TRANSMISSIONS" PROCEEDINGS OF THE GLOBAL TELECOMMUNICATIONS CONFERENCE (GLOBECOM),US,NEW YORK, IEEE, 28. November 1994 (1994-11-28), Seiten 1904-1908, XP000488851 ISBN: 0-7803-1821-8**

## Beschreibung

Die Erfindung betrifft eine Verfahren laut Oberbegriff des Hauptanspruches.

Zur Demodulation von höherstufigen MQAM-Signalen (z.B. 4-, 16-, 32-, 64-, 128-, 256-QAM-Signale) werden empfangsseitig die empfangenen Hochfrequenzsignale mit einem Oszillator, dessen Überlagerungsfrequenz der senderseitigen Träger-Frequenz entspricht, ins Basisband umgesetzt. Diese Basisbandsignale werden dann mit einer Taktfrequenz, die durch das angewendete QAM-Modulationsverfahren vorbestimmt ist, abgetastet. Die bisher bekannten Demodulationsverfahren für solche MQAM-Signale arbeiten mit Regelschaltungen, durch die die Frequenz und Phase des Überlagerungsoszillators exakt auf die Frequenz und Phase des senderseitigen Trägers geregelt wird (DE 43 06 881, 44 10 607 bzw. 44 46 637). Aus den so mittels eines geregelten Oszillators ins Basisband umgesetzten Basisbandsignalen wird dann über einen Phasendetektor ein phasenrichtiges Taktsignal abgeleitet, mit dem dann die Basisbandsignale jeweils exakt zu den vorbestimmten Symbolzeitpunkten abgetastet werden (beispielsweise nach Hoffmann, "A new carrier regeneration scheme for QAM signals", IEEE International Symposium on Circuits and Systems, Finland, June 88, pp. 599-602). Phasenfehler rein rechnerisch durch entsprechende Kompensation der Basisbandsignale berücksichtigt wird. Gleiches gilt für den freilaufenden Taktgenerator, dessen Taktfrequenz ist entsprechend dem angewendeten MQAM-Verfahren gewählt und ein eventueller Taktphasenfehler wird nicht ausgeregelt, sondern wiederum durch entsprechende Kompensation der Basisbandsignale eliminiert. Selbst bei einer 256-QAM-Modulation ist eine Synchronisation in kürzester Zeit in einem Beobachtungsintervall von nur 200 Symbolperioden möglich. Ein erfindungsgemäßes Verfahren eignet sich daher besonders für die Demodulation von TDMA-Übertragungsverfahren mit nur kurzen Symbolfolgen innerhalb eines Bursts.

Das zur Abschätzung des Frequenz- und Phasenversatzes vorgeschlagene erfindungsgemäße Berechnungsverfahren nach Anspruch 5 für den Träger ist nicht nur für diesen Zweck geeignet, sondern könnte auch für andere Zwecke eingesetzt werden, beispielsweise zum Abschätzen der Frequenz eines gestörten Sinussignales unbekannter Frequenz.

Die Erfindung wird im folgenden anhand schematischer Zeichnungen an Ausführungsbeispielen näher erläutert.

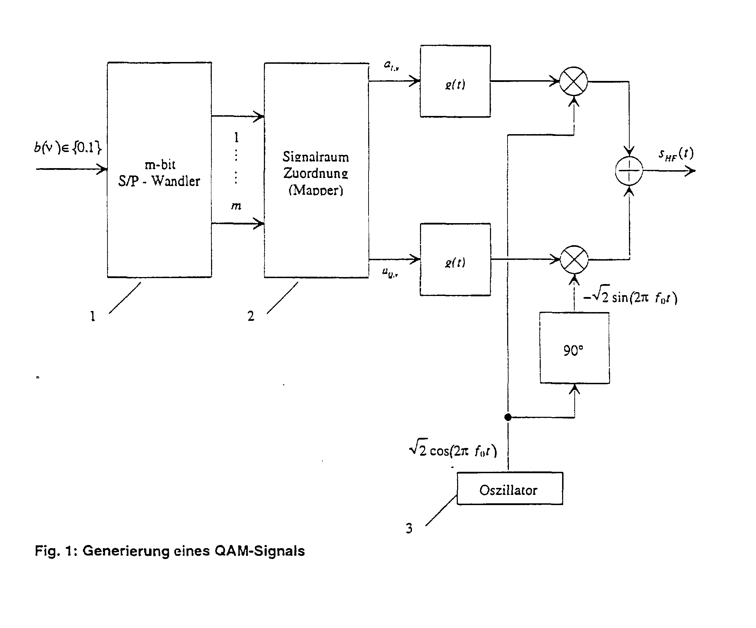

Fig. 1 zeigt schematisch die senderseitige Aufbereitung eines MQAM-Signals. Hierbei werden in einem Serien/Parallel-Wandler 1 mehrere m-Bit des zu übertragenden seriellen Datenstromes zu einem höherwertigen komplexen Symbol zusammengefaßt. Der komplexe Symbolraum umfaßt M Elemente. In dem Mapper 2 werden auf diese Weise komplexe Symbolworte mit Realteil und Imaginärteil erzeugt, die anschließend durch die um 90° gegeneinander phasenverschobenen Trägerfrequenzen eines Trägergenerators 3 zu dem auszusendenden MQAM-Hochfrequenzsignal vereint werden.

Diese bekannten Demodulationsverfahren besitzen den Nachteil einer relativ langen Akquisitionszeit, die im Extremfall zu einem sogenannten Hangup führen kann. Sie sind nur für sehr lange Symbolfolgen einsetzbar, bei denen die Akquisitionszeit eine untergeordnete Rolle spielt. Für sogenannte TDMA-Übertragungen (Time Division Multiple Access) mit sehr kurzen Symbolfolgen sind diese bekannten Verfahren nicht geeignet.

Für TDMA-Übertragungen ist es bekannt, den Taktphasenfehler zu berechnen und damit die zeitliche Verschiebung des Basisbandsignals zu kompensieren (EFSTATHIOU D AT AL: [SPEC041d]A COMPARISON STUDY OF THE ESTIMATION PERIOD OF CARRIER PHASE AND AMPLITUDE GAIN ERROR FOR 16- ARY QAM RAYLEIGH FADED BURST TRANSMISSION' PROCEEDINGS OF THE GLOBAL TELECOMMUNICATIONS CONFERENCE (GLOBECOM), US, NEW YORK, IEEE, 28. November 1994 (1994-11-28), Seiten 1904-1908, ISBN: 0-7803-1821-8).

Es ist daher Aufgabe der Erfindung, ein Demodulationsverfahren für MQAM-Signale zu schaffen, mit dem auch ohne Kenntnis der übertragenen Symbole auch für kurze Symbolfolgen eine schnelle Synchronisation durchführbar ist.

Diese Aufgabe wird gelöst durch ein Verfahren laut Hauptanspruch, vorteilhafte Weiterbildungen ergeben sich aus den Unteransprüchen.

Ein erfindungsgemäßes Verfahren ermöglicht rein analytisch ohne Regelung eine schnelle Synchronisation der empfangenen QAM-Signale. Damit ist die Akquisitionszeit exakt definiert und es können keine sogenannten Hangups auftreten. Außerdem ist keine Kenntnis der übertragenen Symbole notwendig. Die Synchronisationsparameter wie Takt, Phase, Trägerfrequenz- und Trägerphasenversatz werden beim erfindungsgemäßen Verfahren rein analytisch berechnet und zwar mit einem sehr geringen Rechenaufwand. Ein grundsätzlicher Unterschied gegenüber den bekannten Demodulationsverfahren besteht darin, daß der Überlagerungsoszillator zur Rückumsetzung ins Basisband nicht mehr bezüglich Frequenz und Phase auf den Sollwert geregelt wird, sondern daß nur ein auf einige Prozent der Symbolrate genau auf die Trägerfrequenz eingestellter Überlagerungsoszillator verwendet wird, während ein eventueller Frequenz- und

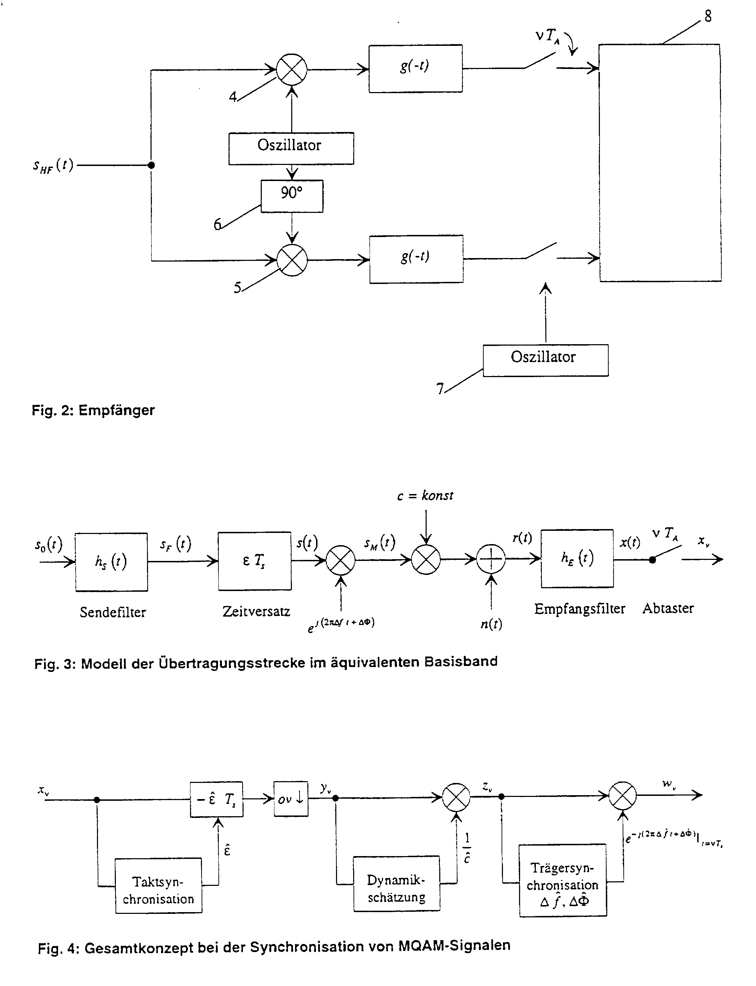

Fig. 2 zeigt den zugehörigen Quadraturempfänger.

Das empfangene MQAM-Hochfrequenzsignal wird wieder in zwei Mischern 4 und 5 mit den um 90° gegeneinander phasenverschobenen Überlagerungsfrequenzen eines Trägeroszillators 6 ins Basisband herabgemischt und anschließend werden die Basisbandsignale mittels eines Taktgenerators 7, dessen Taktfrequenz der dem jeweils angewendeten MQAM-Verfahren eigenen Taktfrequenz entspricht, abgetastet. Die Abtastrate muß so groß gewählt werden, dass das Abtasttheorem erfüllt ist.

Im Gegensatz zu bekannten Demodulationsverfahren wird gemäß der Erfindung der Oszillator 6 nicht mehr auf den exakten Trägerfrequenz und Trägerphasenwert nachgeregelt, sondern der Oszillator 6 ist in seiner Frequenz nur auf einige Prozent der Symbolrate genau auf die senderseitige Trägerfrequenz eingestellt. Auch der Taktgenerator 7 wird nicht in seiner Phase geregelt, nur die Taktfrequenz ist auf den Wert des angewendeten MQAM-Verfahrens eingestellt. Gemäß der Erfindung wird durch einen anschließenden Rechenvorgang der noch bestehende Taktphasenfehler kompensiert, ebenso der durch den nicht geregelten Oszillator 6 eventuell bestehende Frequenz- und Phasenfehler des Trägers. Diese Kompensation der Basisbandsignale erfolgt in einer Kompensationsanordnung 8, deren Funktion und Wirkungsweise nachfolgend näher beschrieben wird.

Fig. 3 zeigt das anhand der Fig. 1 und 2 geschilderte Übertragungsmodell in der äquivalenten Basisbanddarstellung.

Ausgangspunkt ist die zu übertragende digitale komplexe Symbolfolge $s_0(t)$

$$s_0(t) = \sum_{v=-\infty}^{\infty} a_v \, T_s \delta \left( t - v T_s \right)$$

Dieses Signal läßt sich darstellen als die Summe zweier mit den Symbolwerten $a_{I,v}$ , $a_{Q,v}$ gewichteter Diracimpulse zu den Zeiten $t = v \, T_s$ in Real- und Imaginärteil. Die MQAM-Symbole

$$a_v = a_{I,v} + j a_{Q,v}$$

können dabei wie bereits behandelt die Werte $a_{I,v}$ , $a_{Q,v} \in \{\pm 1, \pm 3, \pm 5, \cdots\}$ annehmen. Das Signal $s_F(t)$ nach dem Sendefilter ergibt sich durch Faltung von $s_0(t)$ mit der Impulsantwort $h_s(t)$:

$$s_F(t) = s_0(t) * h_s(t)$$
$$= \sum_{v=-\infty}^{\infty} a_{I,v} \, T_s \, h_s \left( t - v T_s \right) + j \sum_{v=-\infty}^{\infty} a_{Q,v} \, T_s \, h_s \left( t - v T_s \right)$$

Der im Empfänger unbekannte Zeitversatz $\varepsilon \, T_s$ gegenüber den idealen Abtastzeitpunkten wird durch den nachfolgenden Systemblock realisiert. Die Werte $\varepsilon$ liegen dabei in dem Bereich

$$-0.5 \leq \varepsilon < 0.5$$

Für $s(t)$ erhält man

$$s(t) = \sum_{v=-\infty}^{\infty} a_{I,v} \, T_s \, h_s \left( t - \varepsilon \, T_s - v \, T_s \right) + j \sum_{v=-\infty}^{\infty} a_{Q,v} \, T_s \, h_s \left( t - \varepsilon \, T_s - v \, T_s \right)$$

Der auftretende Frequenzversatz $\Delta f$ und Phasenversatz $\Delta\Phi$ bei der Demodulation werden durch eine Multiplikation mit dem Drehzeiger $e^{j(2\pi \, \Delta f \, t + \Delta\Phi)}$ berücksichtigt.
Das Sendesignal $s_M(t)$ im äquivalenten Basisband ergibt sich auf diese Weise zu

$$s_M(t) = s(t) \cdot e^{j(2\pi\Delta f t + \Delta\Phi)}$$

Das Sendesignal $s_M(t)$ wird auf der Übertragungsstrecke durch additives weißes Gaußsches Rauschen (AWGN) $n(t)$ gestört, es entsteht das Empfangssignal $r(t)$

$$r(t) = s_M(t) + n(t)$$

Im Falle der betrachteten QAM-Übertragung ist das Rauschen $n(t) = n_i(t) + jn_Q(t)$ komplexwertig. Der Realteil $n_i(t)$ und der Imaginärteil $n_Q(t)$ besitzen das zweiseitige Leistungsdichtespektrum (LDS) $N_0/2$ und sind voneinander statistisch unabhängig. Die mittlere Leistung des gesendeten Signales $s_M(t)$ ergibt

$$P_S = \overline{E\left\{|s_M(t)|^2\right\}} = \frac{1}{T_s} \int_0^{T_s} E\left\{|s_M(t)|^2\right\} dt$$

da der Erwartungswert zeitabhängig und periodisch mit $T_s$ ist. Die mittlere Symbolenergie des Sendesignals berechnet sich mit

$$E_s = P_S \cdot T_s = \overline{E\left\{|s_M(t)|^2\right\}} \cdot T_s = \int_0^{T_s} E\left\{|s_M(t)|^2\right\} dt$$

Die in Fig. 3 dargestellte Ausgangsfolge $x_v$ liegt mit einem Oversampling-Faktor von $ov = T_s/T_A$ vor, wobei $T_s$ die Symbolperiode und $T_A$ die Abtastperiode beschreibt.

Die Synchronisation gliedert sich nach **Fig. 4** in drei Stufen

    A. Taktsynchronisation
    B. Dynamikschätzung
    C. Trägersynchronisation

**A. Taktsynchronisation**

Die Folge $x_v$ wird zuerst zur Taktphasenschätzung von dem unbekannten normierten Zeitversatz $\varepsilon$ verwendet. Das Verfahren zur Taktsynchronisation ist rückkopplungsfrei und bekannt (K. Schmidt: Digitale Taktrückgewinnung für bandbreiteneffiziente Mobilfunksysteme, Dissertation, Inst. für Nachrichtentechnik, Darmstadt, Dez. 1993 und Oerder: Algorithmen zur digitalen Taktsynchronisation bei Datenübertragung, Lehrstuhl für Elektrische Regelungstechnik, Aachen, 1989). Anschließend wird die geschätzte zeitliche Verschiebung $\hat{\varepsilon} T_s$ (das Dach wird generell bei Schätzwerten verwendet) durch ein Interpolationsfilter wieder rückgängig gemacht. Anschließend wird eine Unterabtastung um den Oversampling-Faktor $ov$ gemacht, so daß die Folge $w_v$ die noch phasengedrehten Abtastwerte zu den Symbolzeitpunkten darstellt. Durch Auswertung der Betraginformation wird anschließend die Dynamikschätzung von den unbekannten Koeffizienten $c$ durchgeführt und mit dem geschätzten Wert $\hat{c}$ die Multiplikation wieder rückgängig gemacht. Die entstandene Folge $z_v$ wird anschließend zur Frequenz- und Phasenschätzung verwendet. Nach der mit den Schätzwerten durchgeführten Frequenz- und Phasenkompensation entsteht die Folge $w_v$, die im Idealfall gleich der übertragenen Symbolfolge $a_v$ ist. Grundlegende Betrachtungen zur Kompensation können in (K. Schmidt: "Digitale Taktrückgewinnung für bandbreiteneffiziente Mobilfunksysteme", Dissertation, Inst. für Nachrichtentechnik, Darmstadt, Dez. 1993 und Kammeyer: "Nachrichtenübertragung", Teubner-Verlag, Stuttgart, 1992) nachgelesen werden.

Bei allen Schätzungen wird ein Beobachtungsintervall von $N$ Symbolperioden vorausgesetzt.

**B. Dynamikschätzung**

Die Dynamikschätzung ist notwendig, weil bei einer MQAM-Übertragung sowohl in der Symbolphase als auch im Symbolbetrag eine Information enthalten ist. Die Dynamikschätzung wird in bis zu drei Stufen durchgeführt:

    1. Vorschätzung: Zuerst wird eine erste grobe Schätzung der Dynamik analytisch durch Vergleich des berechneten Mittelwertes des Nutzsignalbetrages mit dem statistischen Mittelwert des Symbolbetrages der entsprechenden MQAM-Modulation durchgeführt.

    2. Grobschätzung: Anschließend wird durch ein Suchverfahren die zu schätzende multiplikative Konstante variiert und diejenige Konstante ausgewählt, welche die Log-Likelihood-Funktion maximiert. Dieses Verfahren zur Dynamikschätzung kann auch als Korrelation der Verteilungsdichtefunktion der empfangenen Symbolbeträge mit der statischen Verteilungsdichtefunktion der Symbolbeträge interpretiert werden.

3. <u>Feinschätzung:</u> Ausgehend von diesem Wert wird anschließend der Feinschätzungwert **analytisch** in Anlehnung an die Maximum-Likelihood-Theorie berechnet.

Die Anzahl der verwendeten Stufen hängt von der gewünschten Genauigkeit ab. Bei großer Beobachtungslänge $N$ reicht z.B. nur die Vorschschätzung aus, während bei kurzer Beoachtungslänge und hoher Stufenzahl $M = 256$ alle drei Stufen erforderlich sind.

**Vorschätzung**

Zunächst wird eine erste Schätzung der Dynamik durch Vergleich des mittleren Nutzsignalbetrages mit dem idealen Erwartungswert des Symbolbetrages einer entsprechenden MQAM-Konstellation durchgeführt. Mit den $M$ verschiedenen Symbolen $A_\alpha$ eines MQAM-Symbolalphabetes berechnet sich der ideale Erwartungswert $Betr_{id}$ der Symbolbeträge zu:

$$Betr_{id} = \frac{1}{M} \sum_{\alpha=1}^{M} |A_\alpha|$$

Im einzelnen ergeben sich für die unterschiedlichen Modulationsstufen folgende Werte:

|  | $Betr_{id}$ |
|---|---|
| 16QAM | 2,9954 |
| 32QAM | 4,2302 |
| 64QAM | 6,0869 |
| 128QAM | 8,5315 |
| 256QAM | 12,2253 |

Der geschätzte Betrag ergibt sich aus den $N$ Werten durch

$$Betr_{schätz} = \frac{1}{N} \sum_{v=0}^{N-1} |x_v|$$

Der Schätzwert der ersten Stufe ergibt damit der Vorschätzwert nach **Gl.(1)**

$$\hat{c}_1 = \frac{Betr_{schätz}}{Betr_{id}} = \frac{\frac{1}{N} \sum_{v=0}^{N-1} |x_v|}{Betr_{id}} \tag{1}$$

**Grobschätzung**

Das Verfahren der Grobschätzung wird in Anlehnung an die Maximum-Likelihood-Theorie entwickelt. Das Prinzip der Dynamikschätzung beruht auf der Korrelation der relativen Häufigkeit der eingelesenen Symbolbeträge mit der Verteilungsdichtefunktion eines idealen MQAM-Signales.

Ausgangspunkt ist der folgende Ansatz für die Maximum-Likelihood-Funktion. Angenommen wird eine begrenzte Symbolzahl bei einer unbegrenzten Beobachtungsdauer. Es soll der Erwartungswert über die gesamte Beobachtungssequenz maximiert werden.

$$L(\tilde{c}) = E_{\tilde{a}}\left\{e^{-\frac{1}{N_0}\int\left|r(t)-\tilde{c}\,s(t)e^{j(2\pi\Delta f\,t+\Delta\Phi)}\right|^2 dt}\right\}$$

$$= E_{\tilde{a}}\left\{e^{-\frac{1}{N_0}\int\left[|r(t)|^2 - 2\tilde{c}\,Re\left\{r(t)s^*(t)e^{-j(2\pi\Delta f\,t+\Delta\Phi)}\right\} + \tilde{c}^2|s(t)|^2\right]dt}\right\}$$

$$(2)$$

Da der Schätzparameter nicht enthalten ist, darf man $r(t)$ weglassen und dafür mit $T_s\cdot|x_v|^2$ erweitern. Mit der Normierung

$$\int_{-\infty}^{\infty} h_s^2(t)dt = h_{ges}(0) = \frac{1}{T_s}$$

und nach der Zwischenrechnung

$$\int_{-\infty}^{\infty}\underbrace{\sum_v\sum_\mu T_s^2 a_v a_\mu^* h_s(t-vT_s)h_s(t-\mu T_s)}_{|s(t)|^2}dt = \sum_v\sum_\mu T_s^2 a_v a_\mu^* \underbrace{h_{ges}\big((v-\mu)T_s\big)}_{=\begin{cases}1\ \text{für}\ v=\mu\\0\ \text{für}\ v\neq\mu\end{cases}}$$

ergibt sich der Ausdruck

$$L(\tilde{c}) = E_{a_v}\left\{e^{-\frac{T_s}{N_0}\sum_v\left[|x_v|^2-2\tilde{c}\,Re\left\{x_v\,a_v^* e^{-j(2\pi\Delta f\,vT_s+\Delta\Phi)}\right\}+\tilde{c}^2|a_v|^2\right]}\right\}$$

Nun kann der Exponent zusammengefaßt werden und man erhält

$$L(\tilde{c}) = E_{a_v}\left\{e^{-\frac{T_s}{N_0}\sum_v\left|x_v-\tilde{c}\,a_v e^{j(2\pi\Delta f\,vT_s+\Delta\Phi)}\right|^2}\right\}$$

$$= E_{a_v}\left\{\prod_v e^{-\frac{T_s}{N_0}\left|x_v-\tilde{c}\,a_v e^{j(2\pi\Delta f\,vT_s+\Delta\Phi)}\right|^2}\right\}$$

Da die Einzelsymbole $a_v$ voneinander statistisch unabhängig sind, kann die Produktbildung nach der Erwartungswertbildung ausgeführt werden.

$$L(\widetilde{c}) \;=\; \prod_{\nu} E_{a_{\nu}}\left\{ e^{-\frac{T_s}{N_0}\left|\frac{x_{\nu}-\widetilde{c}\,a_{\nu}e^{j(2\pi\Delta f\,\nu T_s+\Delta\Phi)}}{e_{\nu}}\right|^2} \right\}$$

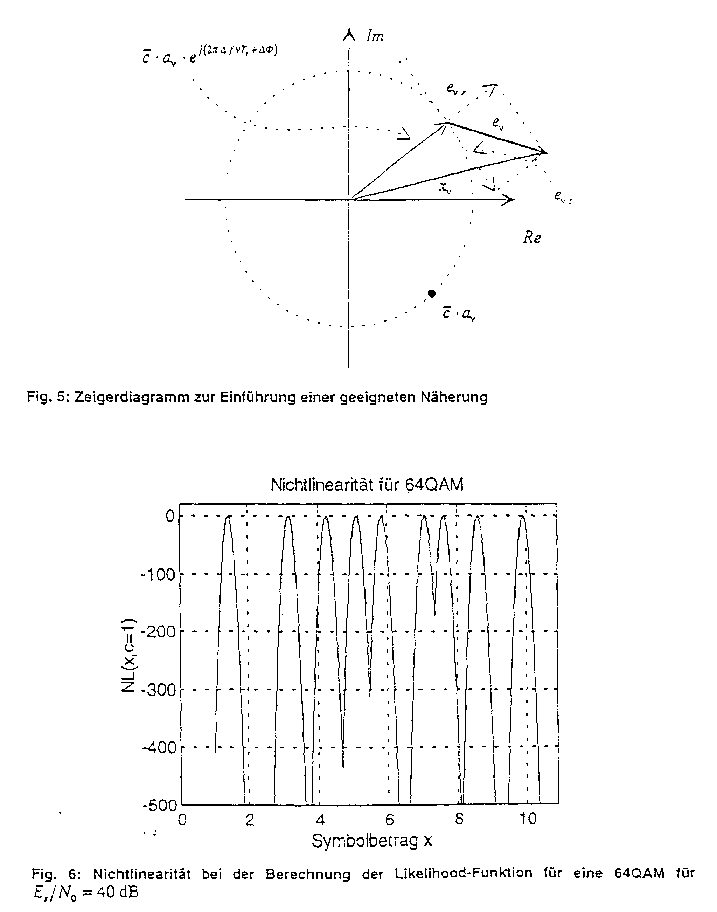

Die Werte $\Delta f$, $\Delta\Phi$ sind nicht bekannt und sollen aus Aufwandsgründen nicht als Versuchsparameter eingesetzt werden. Da das Maximum der Log-Likelihood-Funktion gesucht wird, ist nach **Fig. 5** bei hinreichend großem Störabstand die Abweichung

$$e_{\nu} \;=\; x_{\nu} - \widetilde{c}\,a_{\nu}\,e^{j(2\pi\Delta f\,\nu T_s+\Delta\Phi)}$$

so klein, daß folgende Näherung zulässig ist, für die $\Delta f$ und $\Delta\Phi$ nicht bekannt sein müssen:

$$\begin{aligned}
|e_{\nu}|^2 &= \left|e_{\nu r} + e_{\nu I}\right|^2 \\[4pt]
&\approx \left|e_{\nu r}\right|^2 \\[4pt]
&\approx \left|\,|x_{\nu}| - \left|\widetilde{c}\,a_{\nu}\,e^{j(2\pi\Delta f\,\nu T_s+\Delta\Phi)}\right|\,\right|^2 \\[4pt]
&= \left|\,|x_{\nu}|^2 - \left|\widetilde{c}\,a_{\nu}\right|\,\right|^2
\end{aligned}$$

$$(3)$$

Diese Näherung ist notwendig, weil $e_{\nu t}$ wegen des unbekannten Frequenz- und Phasenversatzes ebenfalls nicht bekannt ist.

Durch diese Approximation entsteht kein datenabhängiger Schätzfehler, da bei einem steigenden Störabstand $E_s/N_0 \to \infty$ die Folge

$$x_{\nu} \to \widetilde{c}\,a_{\nu}\,e^{j(2\pi\Delta f\,\nu T_s+\Delta\Phi)}$$

strebt. Damit besitzt Gl.(3) bei $\widetilde{c} = c$ sein Minimum und es entsteht kein Schätzfehler:

$$|e_{\nu}|^2 \;=\; \left|\,|x_{\nu}|^2 - \left|\widetilde{c}\,a_{\nu}\right|\,\right|^2 = 0$$

Durch Einsetzen von Gl.(3) in die Log-Likelihood-Funktion ergibt sich

$$L(\widetilde{c}) \;\approx\; \prod_{\nu} E_{a_{\nu}}\left\{ e^{-\frac{T_s}{N_0}\left|\,|x_{\nu}|-\widetilde{c}\,|a_{\nu}|\,\right|^2} \right\}$$

Nach Logarithmieren erhält man die sogenannte Log-Likelihood-Funktion. Das bietet den Vorteil, daß keine Produkte gebildet werden müssen, sondern Summen. Diese einfachere Realisierung ist zulässig, da die ln-Funktion streng monoton steigend ist und damit die Lage des Maximums nicht verändert wird.

$$l(\widetilde{c}) = \ln L(\widetilde{c}) = \sum_\nu \ln\left( \quad E_{a_\nu}\left\{ e^{-\frac{T_s}{N_0}\||x_\nu|-\widetilde{c}\,|a_\nu|\|^2} \right\} \quad \right)$$

Dieser Ausdruck ist somit nur noch vom Betrag der empfangenen Symbole abhängig, der Frequenzund Phasenversatz gehen durch die vorgenommenen Näherungen nicht mit ein. Die Erwartungswertbildung über alle $M$ möglichen Symbole des Symbolalphabetes $a_\nu \in A_\alpha$ mit den Beträgen $|A_\alpha|$ liefert

$$l(\widetilde{c}) = \sum_\nu \ln\left( \underbrace{\frac{1}{M}\sum_{\alpha=1}^{M} e^{-\frac{T_s}{N_0}\||x_\nu|-\widetilde{c}\,|A_\alpha|\|^2}}_{NL(|x_\nu|,\widetilde{c})} \right)$$

Diese Nichtlinearität wird für 64QAM beispielhaft in **Fig. 6** gezeigt. Ziel ist es nun, die Nichtlinearität

$$NL(|x_\nu|,\widetilde{c})$$

zu vereinfachen.

Zwischen dem Term $\frac{T_s}{N_0}$ und dem Störabstand $E_s/N_0$ besteht folgender Zusammenhang:

$$\frac{T_s}{N_0} = \frac{T_s \cdot \overline{|a_\nu|^2}}{N_0 \cdot \overline{|a_\nu|^2}} = \frac{E_s}{N_0} \cdot \frac{1}{\overline{|a_\nu|^2}}$$

mit

$$\overline{|a_\nu|^2} = \frac{1}{M}\sum_{\nu=1}^{M}|A_\alpha|^2$$

Da der Störabstand in diesen Betrachtungen eine frei wählbare Konstante darstellt, geht man im folgenden davon aus, daß der Störabstand $E_s/N_0 \gg 1$ ist und damit nach Fig. 5 im Bereich des Maximums

$$|x_\nu| \rightarrow \widetilde{c}\,|\hat{a}_\nu|$$

konvergiert.

$$NL(|x_\nu|,\widetilde{c}) \doteq \ln\left( \frac{1}{M}\sum_{\alpha=1}^{M} e^{-\frac{E_s}{N_0}\frac{1}{|a_\nu|^2}\||x_\nu|-\widetilde{c}|A_\alpha|\|^2} \right) \approx \ln\left( \frac{n_\alpha}{M} e^{-\frac{E_s}{N_0}\frac{1}{|a_\nu|^2}\||x_\nu|-\widetilde{c}|\hat{a}_\nu|\|^2} \right)$$

In der Näherung gibt $n_\alpha$ an, wie oft der Betrag $|A_\alpha|$ in der Summe über die $M$ Werte des Symbolalphabetes vorkommt, außerdem wird jedem Symbolbetrag $|x_\nu|$ ein geschätzter idealer Betrag

$$\widetilde{c}\,|\hat{a}_\nu|$$

zugeordnet.

Für die Implementierung der Nichtlinearität werden also die Überlappungen der einzelnen "Keulen" in Fig. 6 vernachlässigt, da für $|A_\alpha| \neq |a_v|$ gilt:

$$e^{-\frac{E_s}{N_0}\frac{1}{|a_v|^2}\cdot||x_v|-\overline{c}|A_\alpha||^2} \quad \cdot << \quad e^{-\frac{E_s}{N_0}\frac{1}{|a_v|^2}\cdot||x_v|-\overline{c}|\hat{a}_v||^2}$$

Zur Approximation der Log-Likelihood-Funktion wird

$$\frac{E_s}{N_0}\cdot\frac{1}{|a_v|^2} := 1$$

gesetzt. In Simulationen hat sich herausgestellt, daß die Gewichtung der einzelnen Summenterme mit den Faktoren $\frac{n_\alpha}{M}$ keinen Gewinn bringt, damit erhält man schließlich zur Grobschätzung den approximierten Ausdruck für die Log-Likelihood-Funktion:

$$l_{appr}(\widetilde{c}) = -\sum_v \left\| |x_v| - \widetilde{c}\,|\hat{a}_v| \right\|^2 \quad \Rightarrow \hat{c}_2 \tag{4}$$

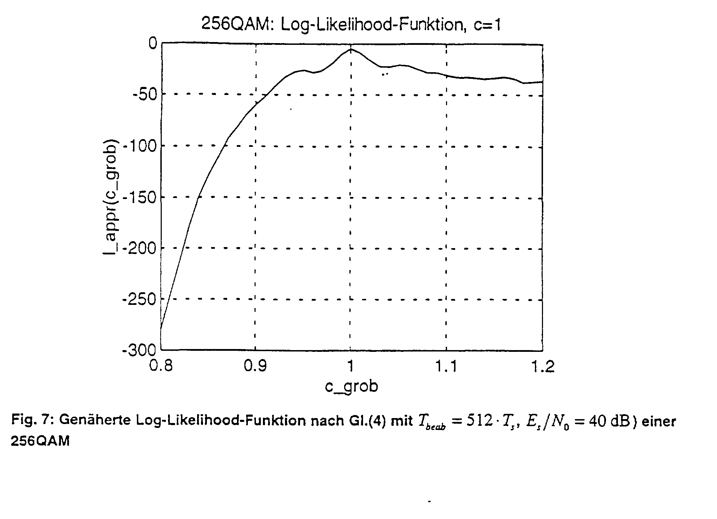

Man beachte, daß $|\hat{a}_v|$ für jeden Versuchsparameter $\widetilde{c}$ neu geschätzt werden muß, weil abseits vom zu schätzenden $c$ viele Entscheidungsfehler gemacht werden. Ein simuliertes Beispiel wird in **Fig. 7** für eine 256QAM mit einem zu schätzenden $c = 1$ gezeigt.

In einer Schleife wird nun $\widetilde{c}$ über einen Bereich variiert, der den maximalen Fehler der Vorschätzung abdecken muß. Dieser Fehler liegt bei durchgeführten Simulationen bei kurzen Beobachtungslängen bei maximal 10%, d.h. nach erfolgter Korrektur mit dem Vorschätzwert $\hat{c}_1$ ist ein Variationsbereich von

$$\widetilde{c} = 0.7 \cdot \hat{c}_1 \quad \cdots \quad 1.3 \cdot \hat{c}_1$$

bei weitem ausreichend. Die Schrittweite $dc$ muß entsprechend dem Modulationsverfahren so fein gewählt werden, damit möglichst keine Betragsfehlentscheidungen der $|\hat{a}_v|$ auftreten. Damit ergeben sich folgende Schrittweiten als Richtwerte:

|  | Schrittweite $dc$ |
|---|---|
| 16QAM | 0,1 |
| 32QAM | 0,05 |
| 64QAM | 0,03 |
| 128QAM | 0,02 |
| 256QAM | 0.01 |

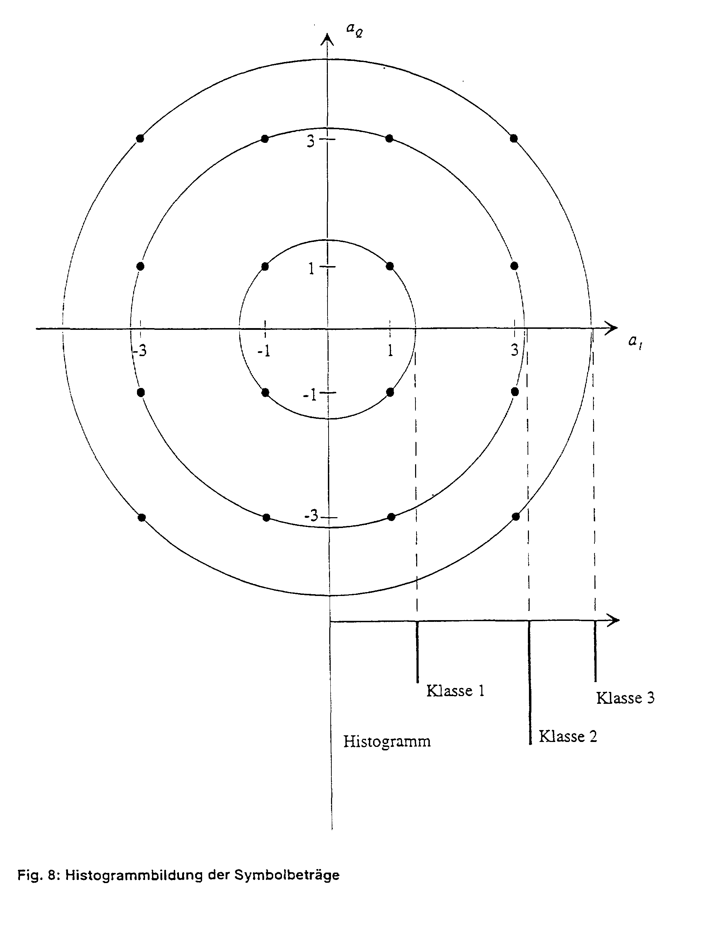

Es wird derjenige Faktor $\hat{c}_2$ ausgewählt, der die Log-Likelihood-Funktion Gl.(4) maximiert. Dies entspricht der Korrelation des Histogrammes der empfangenen Symbolbeträge mit dem einer idealen Konstellation in **Fig. 8.** Damit liegt der Grobschätzwert $\hat{c}_2$ vor.

## Feinschätzung

Die Feinschätzung arbeitet data-aided, d.h. nach Kompensation mit dem vorher geschätzten $\hat{c}_2$ werden zuerst die Symbolbeträge $|\hat{a}_v|$ geschätzt. Da in der Log-Likelihood-Funktion bei der data-aided-Version in Gl.(2) kein Erwartungswert gebildet wird, muß in diesem Fall (ohne Näherung) die Log-Likelihood-Funktion $l_{appr}(\widetilde{c})$ nach Gl.(4) ma-

ximiert werden. Da die einzelnen $|\hat{a}_v|$ mit großer Wahrscheinlichkeit bei bekanntem $\hat{c}_2$ richtig geschätzt werden, kann das Maximum durch Berechnung der Ableitung gefunden werden:

$$\frac{\partial\, l_{appr}(\tilde{c})}{\partial\, \tilde{c}} = \sum_v 2\big[\,|x_v| - \tilde{c}\,|\hat{a}_v|\,\big]\cdot|\hat{a}_v| = 0\,\Big|_{\tilde{c}\,=\,\hat{c}_3}$$

Im Maximum von $l_{appr}(\tilde{c})$ gilt $\hat{c}_3 = \tilde{c}$. Damit ergibt sich die Berechnungsvorschrift der Feinschätzung **Gl.(5)**

$$\hat{c}_3 \;=\; \frac{\sum_{v=0}^{N-1}|x_v|\cdot|\hat{a}_v|}{\sum_{v=0}^{N-1}|\hat{a}_v|^2} \tag{5}$$

Die Schätzwerte $|\hat{a}_v|$ werden von der vorhergehenden Grobschätzung beim Dynamikschätzwert $\hat{c}_2$ verwendet.

Der Ausdruck ist leicht überprüfbar. Unter der Annahme eines unendlich großen Störabstandes $E_s/N_0 = \infty$ folgt $|x_v| \rightarrow |a_v|$. $c$, die Betragszuordnung erfolgt dann mit $|\hat{a}_v| = |a_v|$ immer fehlerfrei und die Feinschätzung nach Gl. (5) liefert gemäß

$$\hat{c}_3 = \frac{\sum_{v=0}^{N-1}|a_v|\cdot c\cdot|a_v|}{\sum_{v=0}^{N-1}|a_v|^2} = c\cdot\frac{\sum_{v=0}^{N-1}|a_v|^2}{\sum_{v=0}^{N-1}|a_v|^2} = c \qquad \textbf{q.e.d.}$$

den korrekten Wert. Der Ablauf zur Dynamikkorrektur kann so an die Modulationsstufe, die gewünschte Genauigkeit, die vorliegenden Signalgeräuschleistungsverhältnisse sowie an die verwendete Datensatzlänge adaptiert werden, indem nur die notwendigen Stufen des Schätzverfahrens eingesetzt werden.

Als Maß für die Güte der Dynamikkorrektur wird die Standardabweichung des geschätzten Faktors $\hat{c}$ betrachtet:

$$\sigma_c = \sqrt{E\{\hat{c} - c\}^2}$$

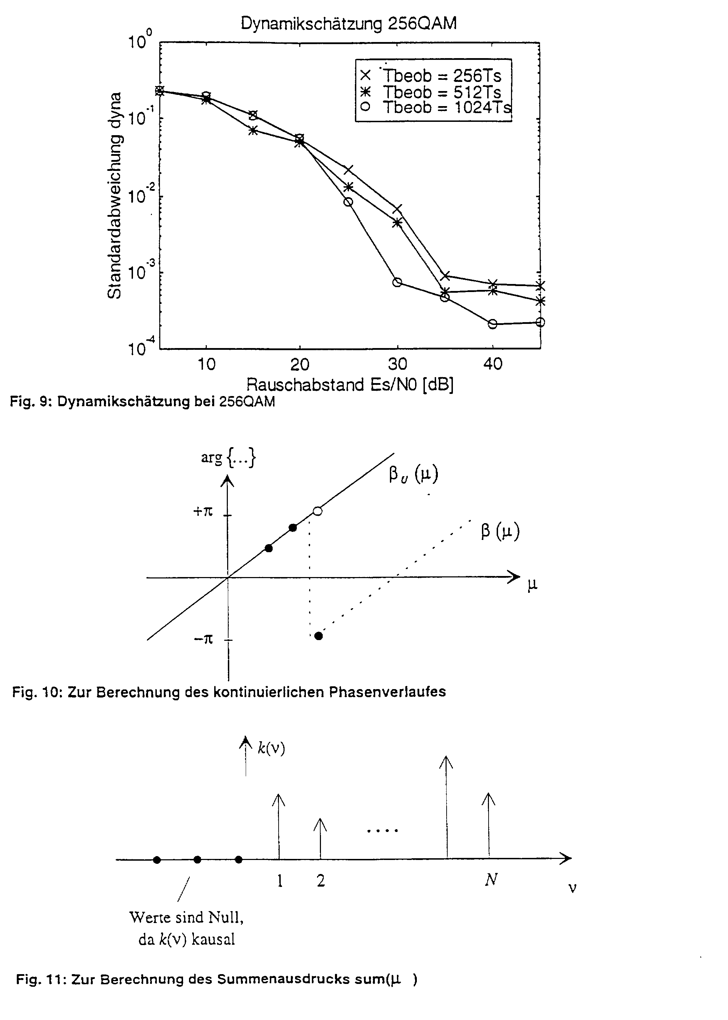

Hierzu wird in **Fig. 9** die simulierte Standardabweichung der Dynamikschätzung einer 256QAM ($c = 1$ eingestellt) für verschiedene Beobachtungslängen ( = Anzahl der Symbole $N$) bei Verwendung aller drei Stufen gezeigt. Gemäß Tabelle auf Seite 11 muß zur fehlerfreien Symbolentscheidung

$$|\hat{c} - c| \overset{!}{\leq} 0.01$$

gelten. Man sieht, daß selbst bei kleiner Beobachtung von nur 256 Symbole ab einem Störabstand von $E_s/N_0 \approx 30$ dB der RMS-Fehler so klein wird, daß aufgrund des Dynamikschätzfehlers keine Fehlentscheidungen bei $\hat{a}_v$ mehr auftreten.

## C. Träger- und Phasensynchronisation

Die Träger- und Phasensynchronisation wird nach dem **NDA**-Verfahren (**N**on-**D**ata-**A**ided, d.h. ohne Kenntnis der übertragenen Symbole $a_v$) durchgeführt in Anlehnung an die Maximum-Likelihood-Theorie durchgeführt. Das nachfolgende **DA**-Verfahren (**D**ata-**A**ided, d.h. mit Hilfe von geschätzten Symbole $\hat{a}_v$) ist optional und erreicht die theoretisch mögliche Fehlervarianz der geschätzten Frequenz und Phase. Dieses Verfahren muß nur dann verwendet werden, wenn maximale Genauigkeit (z.B. bei geringer Symbolzahl $N$) gefordert wird.

**NDA-Verfahren**

Der Algorithmus liefert Schätzwerte $\widehat{\Delta f}$ für den Frequenzversatz und $\widehat{\Delta \Phi}$ für den Phasenversatz. Im Gegensatz zu den meisten bisher bekannten Verfahren wird der hier vorgestellte Algorithmus in einer offenen - "open loop"-Struktur analytisch realisiert.

Die zu maximierende Likelihood-Funktion zur Frequenz- und Phasenschätzung lautet ($c = 1$ und $\varepsilon = 0$ gesetzt)

$$L\left(\Delta\widetilde{f},\Delta\widetilde{\Phi}\right) \;=\; \mathrm{E}_{\tilde{a}}\left\{ e^{-\frac{1}{N_0}\int\left|r(t)-\tilde{s}(t)e^{j\left(2\pi\Delta\tilde{f}t+\Delta\tilde{\Phi}\right)}\right|^2 dt} \right\}$$

wobei in Fig. 3 die einzelnen Signale definiert sind. Der Ausdruck $\mathrm{E}_{\tilde{a}}^{o}\{\ \}$ beschreibt den Erwartungswert bezüglich den $N$ übertragenen Symbolen $a_v$. Als Schätzwert werden die Werte der Versuchsparameter (generell mit einer Schlange gekennzeichnet) $\Delta\,\widetilde{\Delta f}$ und $\Delta\widetilde{\Phi}$, bei denen die Likelihood-Funktion maximal wird. Bei der MQAM-Übertragung treten $M$ gleichwahrscheinlichen Symbole $A_\alpha$ auf. Nach längerer Zwischenrechnung läßt sich die Likelihood-Funktion zu

$$L\left(\Delta\widetilde{f},\Delta\widetilde{\Phi}\right) \;=\; \underbrace{const}_{:=1} \cdot \prod_{v=0}^{N-1} \frac{1}{M}\sum_{\alpha=1}^{M} e^{-\frac{T_s}{N_0}\left|z_v - a_\alpha e^{j\left(2\pi\Delta\tilde{f}vT_s+\Delta\tilde{\Phi}\right)}\right|^2}$$

mit der nicht weiter interessierenden Konstanten *const* vereinfachen. Man sieht, daß in der Likelihood-Funktion nicht mehr analogen Zeitverläufe auftreten, sondern nur noch die Abtastfolge $z_v$ (siehe Fig. 4) zu den Symbolzeitpunkten.

Die Logarithmusfunktion ist monoton steigend und ändert damit das Maximum nicht. Man erhält die Log-Likelihood-Funktion nach **Gl.(6)**

$$l\left(\Delta\widetilde{f},\Delta\widetilde{\Phi}\right) \;=\; \ln L\left(\Delta\widetilde{f},\Delta\widetilde{\Phi}\right)$$

$$= \sum_{v=0}^{N-1}\ln\sum_{\alpha=1}^{M}\left\{ e^{-\frac{T_s}{N_0}\left|z_v - A_\alpha e^{j\left(2\pi\Delta\tilde{f}vT_s+\Delta\tilde{\Phi}\right)}\right|^2} \right\}$$

$$= \sum_{v=0}^{N-1}\ln\sum_{\alpha=1}^{M}\left\{ e^{-\frac{T_s}{N_0}\left|z_v e^{-j\left(2\pi\Delta\tilde{f}vT_s+\Delta\tilde{\Phi}\right)} - A_\alpha\right|^2} \right\}$$

$$(6)$$

Für die nachfolgende Schritte muß gemäß **Gl.(7)**

$$z_v = \left|z_v\right| \cdot e^{j\varphi_v}$$

$$(7)$$

die Eingangstolge in Polarkoordinaten umgerechnet werden. Mit Definition der Nichtllinearität

$$NL(z) = \ln \sum_{\alpha=1}^{M} \left\{ e^{-\frac{T_s}{N_0}\left| z - A_\alpha \right|^2} \right\}$$

(8)

mit dem allgemeinen komplexen Variablen $z$ ergibt sich durch Einsetzen von Gl.(8) in Gl.(6) die Log-Likelihood-Funktion

$$l\left(\Delta\tilde{f},\Delta\tilde{\Phi}\right) = \sum_{\nu=0}^{N-1} NL\left( |z_\nu| \cdot e^{j\left(\varphi_\nu - 2\pi\Delta\tilde{f}\,\nu T_s - \Delta\tilde{\Phi}\right)} \right)$$

Um zu einem implementierbaren Ansatz zu gelangen, wird folgender verwendet: Es wird eine Fourierreihenentwicklung von NL($z$) bezüglich der Phase durchgeführt. Mit Polardarstellung der komplexen Variablen gemäß

$$z = |z| \cdot e^{j\varphi}$$

läßt sich die Nichtlinearität durch die Fourierreihe nach **Gl.(9)**

$$NL(z) = \sum_{\beta=0,\pm4,\pm8,\cdots} K_\beta\left(|z|\right) \cdot e^{j\beta\varphi}$$

(9)

beschreiben, wobei der $\beta$-te Fourierkoeffizient nur von $|z|$ abhängt und durch Einsetzen der Nichtlinearität in Gl.(8) durch **Gl.(10)**

$$K_\beta\left(|z|\right) = \frac{1}{2\pi} \int_0^{2\pi} NL(z)\, e^{-j\varphi}\, d\varphi$$

(10)

berechnet wird.

Anmerkungen:

- $K_\beta(|z|)$ ist aufgrund der geraden Phasensymmetrie reell
- wegen der $\pi/2$-Phasensymmetrie ist nur jeder vierte Koeffizient $\beta = 0, \pm4, \pm8, \cdots$ ungleich Null
- die Koeffizienten können mit einer FFT berechnet werden
- $K_\beta(|z|)$ werden vorab berechnet und in hinreichend kleinem $\Delta|z|$-Raster in einer Tabelle gelegt. Im Rahmen der Untersuchungen zeigte sich, daß die Koeffizienten $K_4(|z|)$ nur an den idealen Symbolbeträgen $|z| = |A_\alpha|$ ausreichen.

Die Log-Likelihood-Funktion läßt sich somit schreiben:

$$l\left(\Delta\tilde{f},\Delta\tilde{\Phi}\right) \;=\; Re\left\{ \sum_{v=0}^{N-1} K_0\left(\left|z_v\right|\right)\cdot e^{\,j\,0\left(\varphi_v - 2\pi\Delta\tilde{f}\,vT_s - \Delta\tilde{\Phi}\right)} \qquad \Leftarrow \beta = 0 \right.$$

$$+\; 2\cdot\sum_{v=0}^{N-1} K_4\left(\left|z_v\right|\right)\cdot e^{\,j\,4\left(\varphi_v - 2\pi\Delta\tilde{f}\,vT_s - \Delta\tilde{\Phi}\right)} \qquad \Leftarrow \beta = \pm 4$$

$$+\; 2\cdot\sum_{v=0}^{N-1} K_8\left(\left|z_v\right|\right)\cdot e^{\,j\,8\left(\varphi_v - 2\pi\Delta\tilde{f}\,vT_s - \Delta\tilde{\Phi}\right)} \qquad \Leftarrow \beta = \pm 8$$

$$+ \qquad\qquad \cdots \qquad\qquad \left.\right\}$$

$$(11)$$

Der erste Summenausdruck ist für die Fequenz- und Phasenschätzung irrelevant, da dieser unabhängig von den zu schätzenden Parametern ist.

In einer ersten Näherung berücksichtigt man nach **Gl.(12)** nur den vierte Fourierkoeffizient $K_4(|z|)$:

$$l\left(\Delta\tilde{f},\Delta\tilde{\Phi}\right) \;=\; \underset{\substack{\text{irrelevant}\\ \to \text{weglassen}}}{2} \cdot Re\left\{ \sum_{v=0}^{N-1} K_4\left(\left|z_v\right|\right)\cdot e^{\,j\,4\left(\varphi_v - 2\pi\Delta\tilde{f}\,vT_s - \Delta\tilde{\Phi}\right)} \right\}$$

$$(12)$$

Im Bereich des Maximums von Gl.(12) gilt näherungsweise $Re\{\cdots\} \approx |\cdots|$, weil der Gesamtzeiger fast exakt auf der positivien Realteilachse liegt. Damit ist die Näherung in **Gl.(13)**

$$l\left(\Delta\tilde{f}\right) \;=\; \left| \sum_{v=0}^{N-1} K_4\left(\left|z_v\right|\right)\cdot e^{\,j\,4\left(\varphi_v - 2\pi\Delta\tilde{f}\,vT_s - \Delta\tilde{\Phi}\right)} \right|$$

$$=\; \left| \sum_{v=0}^{N-1} K_4\left(\left|z_v\right|\right)\cdot e^{\,j\,4\left(\varphi_v - 2\pi\Delta\tilde{f}\,vT_s\right)} \right|$$

$$(13)$$

zulässig. Man erhält damit einen Ausdruck, der **unabhängig** von der Versuchsphase $\Delta\tilde{\Phi}$ ist. Damit ist das zweidimensionale Schätzproblem auf zwei eindimensionale reduziert worden. Das gesuchte Maximum wird nicht durch Quadrierung von Gl.(13) verschoben. Durch diese Quadrierung ist eine analytische Weiterentwicklung möglich. Damit muß

$$l\left(\Delta\tilde{f}\right)^2 \;=\; \left| \sum_{v=0}^{N-1} K_4\left(\left|z_v\right|\right)\cdot e^{\,j\,4\left(\varphi_v - 2\pi\Delta\tilde{f}\,vT_s\right)} \right|^2$$

maximiert werden. Nach der Substitution gemäß **Gl.(14)**

$$k(v) = K_4\left(\left|z_v\right|\right)\cdot e^{\,j\,4\varphi_v}$$

$$(14)$$

erhält man mit $|x|^2 = x \cdot x^*$

$$l\left(\Delta\tilde{f}\right)^2 = \sum_{\mu=0}^{N-1}\sum_{\nu=0}^{N-1} k(\nu)k^*(\mu)\cdot e^{j\,4\,(\nu-\mu)\,2\pi\,\Delta\tilde{f}\,T_s}$$

$$= \sum_{\mu=0}^{N-1}\left|k(\mu)\right|^2 + 2\cdot\mathrm{Re}\left\{ \sum_{\mu=1}^{N-1}\underbrace{\sum_{\nu=\mu}^{N-1} k(\nu)k^*(\nu-\mu)\cdot e^{-j\,4\,\mu\,2\pi\,\Delta\tilde{f}\,T_s}}_{sum(\mu)} \right\}$$

$$= \underbrace{\sum_{\mu=0}^{N-1}\left|k(\mu)\right|^2}_{\text{nicht relevant}} + 2\cdot\mathrm{Re}\left\{\sum_{\mu=1}^{N-1} sum(\mu)\cdot e^{-j\,4\,\mu\,2\pi\,\Delta\tilde{f}\,T_s}\right\}$$

$$(15)$$

Der erste Term ist unabhängig von $\Delta\tilde{f}$ und muß daher nicht berücksichtigt werden. Mit der Polardarstellung nach **Gl.(16)**

$$sum(\mu) = \left|sum(\mu)\right|\cdot e^{j\beta(\mu)}$$

$$(16)$$

ergibt der Realteil des Summenausdrucks in **Gl.(17)**

$$l\left(\Delta\tilde{f}\right)^2 = 2\cdot\left\{ \sum_{\mu=1}^{N-1} \left|sum(\mu)\right|\cdot\cos\left(\beta(\mu) - 4\mu\,2\pi\,\Delta\tilde{f}\,T_s\right) \right\}$$

$$(17)$$

Für die Cosinus-Funktion gilt bei sehr kleinen Argumenten der Näherungsausdruck

$$\cos(\xi) \approx 1 - \frac{\xi^2}{2}$$

Da das cos-Argument von Gl.(17) im Bereich des Schätzwertes $\hat{\Delta f}$ klein ist, ist diese Näherung zulässig. Man erhält **Gl.(18)**

$$l\left(\Delta\tilde{f}\right)^2 = 2\cdot\left\{ \sum_{\mu=1}^{N-1} \left|sum(\mu)\right|\cdot\left[1 - \frac{\left(\beta_u(\mu) - 4\mu\,2\pi\,\Delta\tilde{f}\,T_s\right)^2}{2}\right] \right\}$$

$$(18)$$

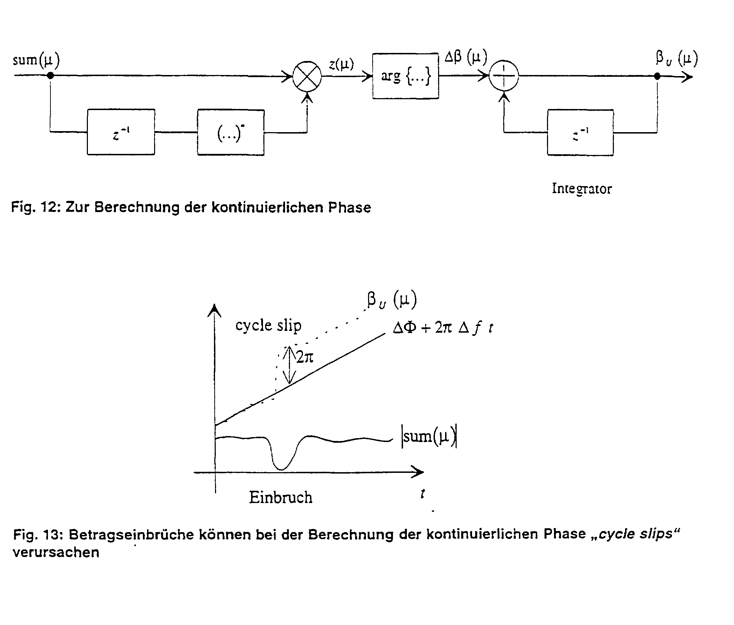

Man beachte, daß in die Phase $\beta(\mu)$ in Gl.(17) aufgrund der $2\pi$-Periodizität der cos-Funktion noch $2\pi$-Sprünge besitzen darf, während in der Näherung in Gl.(18) diese $2\pi$-Sprünge nicht mehr auftreten dürfen, weshalb auch die "unwrapped Phase" $\beta_u(\mu)$ in der Näherung definiert wird. In **Fig. 12** wird dieser Sachverhalt veranschaulicht.
Anschließend bildet man die erste Ableitung dieses Ausdrucks nach $\Delta\tilde{f}$, die im Maximum der Log-Likelihood-Funktion (also an der gesuchten Stelle $\Delta \tilde{f} = \Delta \hat{f}$) zu Null werden muß:

$$\left. \frac{\partial l \left( \Delta \tilde{f} \right)^2}{\partial \Delta \tilde{f}} \right|_{\Delta \tilde{f} = \Delta \hat{f}} \overset{!}{=} 0$$

eingesetzt:

$$4 \cdot \sum_{\mu=1}^{N-1} \left| \mathrm{sum}(\mu) \right| \cdot \left( \beta_u(\mu) - 4\mu \, 2\pi \, \Delta \hat{f} \, T_s \right) \cdot 4\mu T_s \overset{!}{=} 0$$

Nach $\Delta \tilde{f}$ aufgelöst erhält man schließlich den analytischen Schätzwert für den Frequenzversatz gemäß **Gl. (19)**

$$\Delta \hat{f} = \frac{1}{2\pi} \cdot \frac{\displaystyle\sum_{\mu=1}^{N_{sum}-1} \left| sum(\mu) \right| \cdot \beta_u(\mu) \cdot \mu}{4 \cdot \displaystyle\sum_{\mu=1}^{N_{sum}-1} \left| sum(\mu) \right| \cdot \mu^2 \, T_s} \tag{19}$$

Bei der Schätzung werden verallgemeinert $N_{sum}$ Werte verwendet, woraus noch nachfolgend eingegangen wird. Der gesuchte Frequenzversatz ergibt sich also durch die Berechnung einer linearen, betragsgewichteten Regression.
Der Summenausdruck $sum(\mu)$ von Gl.(15)

$$sum(\mu) = \sum_{\nu=\mu}^{N-1} k(\nu) \cdot k^*(\nu - \mu)$$

kann sehr effizient mit Hilfe einer FFT berechnet werden. Da $k(\nu)$ nach **Fig. 11** kausal ist, kann man die untere Summationsgrenze zu Null setzen und erhält

$$sum(\mu) = \sum_{\nu=0}^{N-1} k(\nu) \cdot k^*(\nu - \mu)$$
$$= k(\mu) * k^*(-\mu)$$

Führt man an diesem Ausdruck eine z-Transformation durch, ergibt sich

$$sum(\mu) = k(\mu) * k^*(-\mu)$$

$$SUM(e^{j\Omega}) = K(e^{j\Omega}) \cdot K^*(e^{j\Omega}) = \left|K(e^{j\Omega})\right|^2$$

$$sum(\mu)$$

Die zyklische Faltung der FFT entspricht der linearen Faltung der z-Transformation, wenn für die FFT-Länge gilt:

$$N_{FFT} \overset{!}{\geq} 2N$$

Dazu werden die entsprechenden Vektoren vor der Transformation mit Nullen aufgefüllt. Der Summenausdruck kann also nach folgendem Vorgehen in **Gl.(20)** berechnet werden:

$$k(v) \quad \overset{\text{FFT mit}}{\Longrightarrow} \quad K(e^{j\Omega}) \quad \Rightarrow \quad \left|K(e^{j\Omega})\right|^2 \quad \overset{\text{IFFT}}{\Longrightarrow} \quad sum(\mu)$$
$$N_{FFT} \geq 2N$$

$$(20)$$

Um die "unwrapped" Phase der Summenterme sum($\mu$) zu erzeugen, wird zunächst die Phasendifferenz $\Delta\beta$ ($\mu$) $\in$ [-$\pi$,+$\pi$] zweier aufeinanderfolgender Glieder bestimmt, diese Differenzwerte werden dann aufsummiert. Das Blockschaltbild zur Berechnung der kontinuierlichen Phase wird in **Fig. 12** dargestellt.

Bei einer Implementierung ergibt sich das Problem, daß datenabhängige Fehler zu Betragseinbrüchen in *sum* ($\mu$) führen können, die bei der Berechnung des kontinuierlichen Phasenverlaufes $\beta_U(\mu)$ zu einem Auftreten von unerwünschten $2\pi$-Sprüngen führen können, sogenannten *"cycle slips"*. Die lineare Regression und der daraus ermittelte Schätzwert $\Delta f$ werden damit unbrauchbar, wie in **Fig. 13** verdeutlicht. Bei Betragseinbrüchen können somit im ermittelten, kontinuierlichen Phasenverlauf $2\pi$-Sprünge auftreten. Der geschätzte Phasenverlauf weicht dann vom idealen Phasenverlauf erheblich ab.

Strategien, *cycle slips* zu detektieren und anschließend im Phasenverlauf $\beta(\mu)$ die $2\pi$-Sprünge nachträglich zu entfernen, erweißen sich als wenig brauchbar und zu ungenau. Die bessere Lösung ist die Vermeidung der cycle slips. Das wird erreicht, indem die Folge $k(v)$ in dem Summenausdruck *sum*($\mu$) nicht nur einmal, sondern mehrmals mit sich selbst gefaltet wird, was im Frequenzbereich einer erhöhten Potenzierung entspricht und einfach zu berechnen ist. Dadurch tritt ein stärkerer Mittelungseffekt auf und Einbrüche werden vermieden. Die Vorgehensweise von Gl.(20) wird somit durch **Gl.(21)** erweitert, wobei der Parameter *pot* den Potenzierungsfaktor angibt.

$$k(v) \quad \overset{\text{FFT mit}}{\Longrightarrow} \quad K(e^{j\Omega}) \quad \Rightarrow \quad \left|K(e^{j\Omega})\right|^{pot} \quad \overset{\text{IFFT}}{\Longrightarrow} \quad sum(\mu)$$
$$N_{FFT} \geq Pot \cdot N$$

$$(21)$$

Die Untersuchungen haben gezeigt, daß $pot \leq 5$ selbst bei stark gestörter 256QAM ausreichend ist, höhere Potenzfaktoren bringen keinen weiteren Gewinn.

Dieses Verfahren zur Unterdrückung von "Cycle Slips" ist meines Wissens noch nicht bekannt und ein Bestandteil des Patentanspruches. Dieses Verfahren zur Vermeidung von "Cycle Slips" ist nicht auf auf die MQAM-Synchronisation beschränkt und sollte globaler patentiert werden. Mit diesem Verfahren kann nämlich die Frequenz $\Delta f$ einer verallgemeinerten Folge $k(v)$ gemäß **Gl.(22)**

$$k(v) = einbruch(v) \cdot e^{j(\Delta\omega \, vT_s + \Delta\Phi)} + n(v) \tag{22}$$

mit extremen Einbrüchen (durch Folge $einbruch(v)$ modelliert) und extremen Störungen (durch Rauschfolge $n(v)$ modelliert) hochgenau geschätzt werden. Die Schätzvarianz erreicht näherungsweise die theoretisch mögliche Cramer-Rao-Grenze. Weiterhin kann mit der nachfolgend beschriebenen Phasenschätzung auch die Phase $\Delta\Phi$ geschätzt werden.

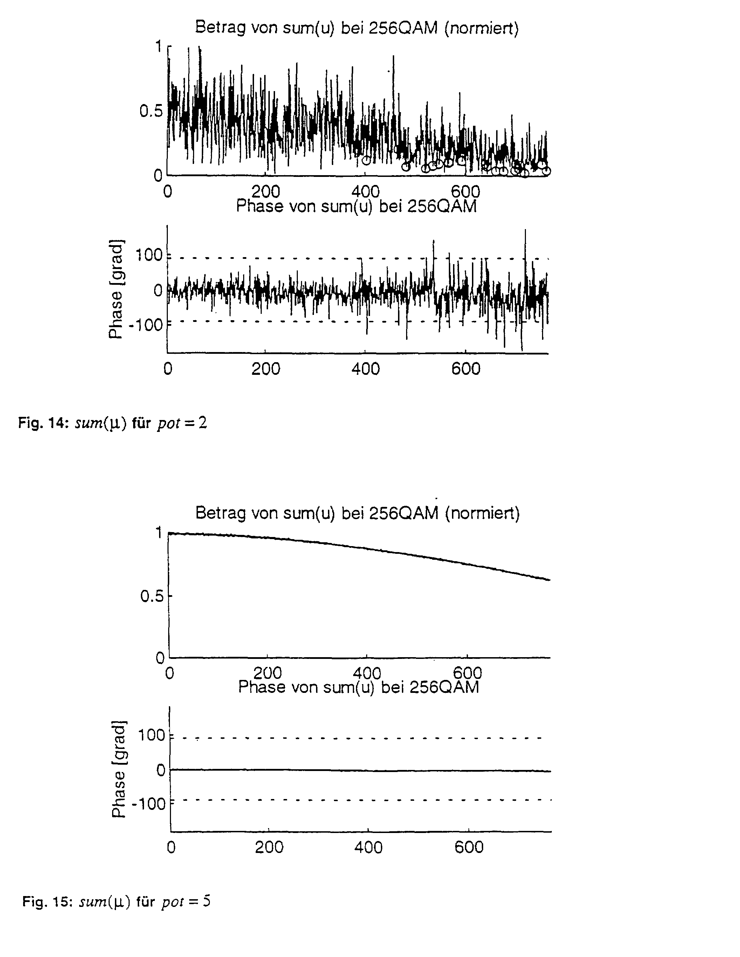

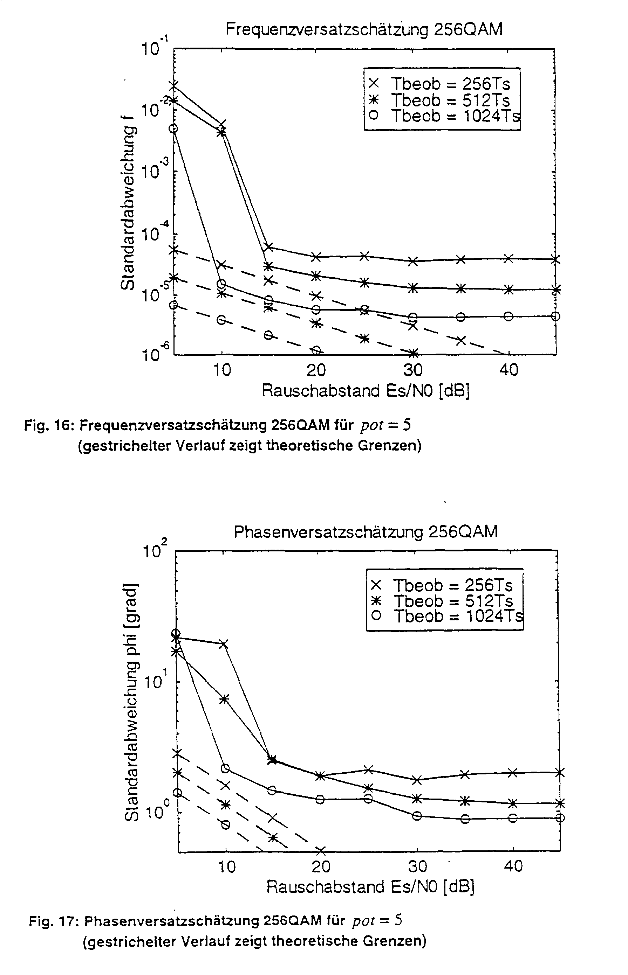

Die Leistungsfähigkeit wird durch **Fig. 14,15** demonstriert. In beiden Figuren wird $sum(v)$ für eine

256QAM mit einer Beobachtungslänge über

$N = 1024$ Symbole bei extremer Störung von

$E_s/N_0 = 15$ dB bei

$\Delta f = \Delta\Phi = 0$

gezeigt. In Fig. 14 wurde $pot = 2$ und in Fig. 15 wurde $pot = 5$ gewählt. Wie man bei einem Vergleich der beiden Figuren sieht, verschwinden durch den Mittelungseffekt bei der höheren Potenz die cycle slips, weil keine Signaleinbrüche mehr in $sum(\mu)$ und damit auch keine großen Phasenabweichungen von der Sollphase Null (da $\Delta f = \Delta\Phi = 0$) mehr auftreten. Damit erweist sich dieses Verfahren auch bei niedrigen Störabständen als äußerst robust. Weiterhin muß nicht die gesamte Folge $sum(\mu)$ zur Schätzung herangezogen, sondern es reichen in Gl.(19)

$$N_{sum} \leq 0.75 \cdot N$$

Summenwerte ($N$ ist die Beobachtungslänge in Symbolperioden) aus, mehr Summenwerte verbessern das Schätzergebnis nicht mehr. Selbst bei wesentlich kleinerem $N_{sum}$ erhält man sehr ähnliche Fehlervarianzen, bei den Simulationen wurde $N_{sum} = 0.25 \cdot N$ verwendet.

Nachdem ein Schätzwert $\Delta\tilde{f}$ berechnet worden ist, muß vor der anschließenden Schätzung des Phasenversatzes $\Delta\Phi$ der geschätzte Frequenzversatz nach Gl.(19) eingesetzt werden. Man erhält wieder ein eindimensionales Schätzproblem zur Phasenbestimmung:

$$l(\Delta\tilde{\Phi}) = \text{Re}\left\{ \sum_{v=0}^{N-1} \underbrace{K_4(|x_v|) \cdot e^{j\,4\varphi_v}}_{k(v)} \cdot e^{-j\,4\left(2\pi\,\Delta\hat{f}\,vT_s + \Delta\tilde{\Phi}\right)} \right\}$$

$$= \text{Re}\left\{ \underbrace{\sum_{v=0}^{N-1} k(v) \cdot e^{-j\,4\cdot2\pi\,\Delta\hat{f}\,vT_s} \cdot e^{-j\,4\,\Delta\tilde{\Phi}}}_{ges} \right\}$$

Dieser Ausdruck ist maximal, wenn in der Formel der Gesamtausdruck $ges$ rein reell ist. Damit kann der Phasenversatz über eine Argumentbildung nach **Gl.(23)** berechnet werden:

$$\Delta\hat{\Phi} = \frac{1}{4}\,\text{arg}\left\{\sum_{v=0}^{N-1} k(v) \cdot e^{-j\,4\cdot2\pi\,\Delta\hat{f}\,vT_s}\right\} \tag{23}$$

Aufgrund der $\pi/2$-Rotationssymmetrie des Symbolalphabetes kann natürlich nur $\Delta\Phi$ mod $\pi/2$ bestimmt werden.

Zur Beurteilung der Synchronisation werden die Standardabweichungen der Ergebnisse $\Delta\hat{f}$ bzw. $\Delta\hat{\Phi}$ bezogen auf die jeweiligen Sollwerte herangezogen:

$$\sigma_f = \sqrt{E\left\{\left(\frac{\Delta\hat{f}}{f_s} - \frac{\Delta f}{f_s}\right)^2\right\}}$$

$$\sigma_\Phi = \sqrt{E\left\{\left(\Delta\hat{\Phi} - \Delta\Phi\right)^2\right\}}$$

In den **Fig. 16,17** werden die Simulationsergebnisse für verschiedene Beoachtungslängen gezeigt. Man sieht, daß für $E_s/N_0 > 15$ dB eine Stagnation durch den datenabhängigen Schätzfehler, weil nach Gl.(12) nur der erste Fourierkoeffizient verwendet wird. Möchte man die theoretisch möglichen gestrichelten Grenzen erreichen, muß noch der im nächsten Kapitel beschriebene DA-Schätzer nachgeschalten werden.

Zusammenfassend kann festgehalten werden: Bisher ist noch kein Verfahren bekannt, mit dem bei hochstufiger MQAM-Modulation analytisch ohne Kenntnis der Symbole der Frequenz- und Phasenversatz berechnet werden kann. Der Ablauf wird nochmals in **Fig.(18)** zusammen gefaßt. Um auf ein numerisch handhabbares Verfahren zu gelangen, wird eine Fourierreihenentwicklung der Nichtlinearität in der Likelihood-Funktion vorgenommen. Es erweist sich als ausreichend, nur einen Fourierkoeffizienten der Reihe zu verwenden. Dadurch wird es möglich, durch ein Open-loop-Verfahren mit Hilfe der Phasenregression in zwei Schritten den Frequenz- und anschließend den Phasenversatz zu berechnen. Weiterhin mußte das Problem der sogenannten cycle slips ($2\pi$-Phasensprünge bei der Berechnung der kontinuierlichen ungewrappten Phase) für die Phasenregression gelöst werden, welche aufgrund von Betragseinbrüchen des komplexen Zeigers auftreten. Diese cycle slips werden effizient durch mehrfache Faltungsoperation unterdrückt, d.h. die Betragsschwankungen werden mit jeder Faltung deutlich reduziert. Dieses Faltungsverfahren zur Vermeidung von *cycle* slips ist nach meiner Kenntnis ebenfalls neuartig. Als Ergebnis der betragsgewichteten Phasenregression erhält man anschließend den Schätzwert des Frequenzversatzes. Als nächstes wird das Empfangssignal mit dem geschätzten Frequenzversatz kompensiert und der Ausgangsdatensatz zur Schätzung des Phasenversatzes verwendet. Die Schätzung des Phasenversatzes erfolgt wieder unter Verwendung des ersten Fourierkoeffizienten der Likelihood-Funktion. Anschließend kann optional eine verbesserte DA-Schätzung durchgeführt werden.

**DA-Verfahren**

In der Literatur wurden DA-Verfahren zur Phasenschätzung z.B. für das QPSK-Modulationsverfahren bereits behandelt (F. M. Gardner: Demodulator Reference Recovery Techniques suited for Digital Implementation, ESA Report, 1988). Allerdings wird nur von einer Phasenschätzung und nicht von einer Frequenz- und Phasenschätzung ausgegangen. Das in der Literatur bekannte Verfahren wurde erweitert, so daß eine Frequenz- und Phasenschätzung möglich ist.

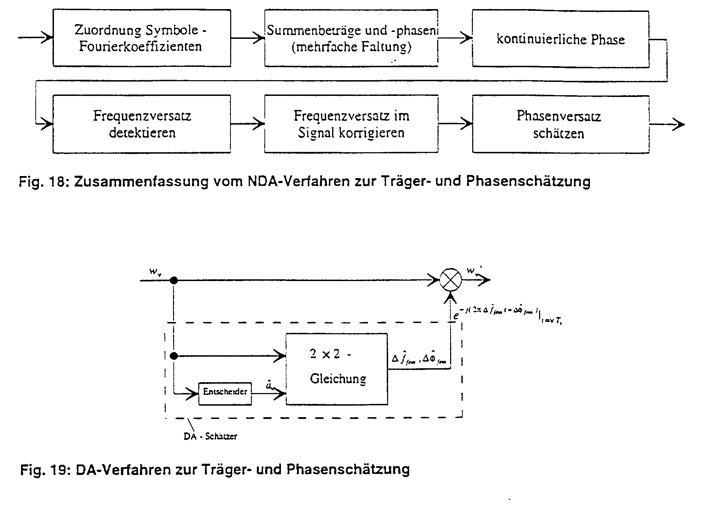

Bei dem DA-Verfahren muß die geschätzte Symbolfolge vorliegen. Hierzu müssen nach **Fig. 19** zuerst aus der frequenz und phasenkompensierten Folge $w_v$ die Symbole $\hat{a}_v$ durch einen Schwellwertentscheider geschätzt werden. Die noch verbleibende Feinschätzwerte $\Delta f_{fein}$ und $\Delta\Phi_{fein}$ werden durch Maximierung der Log-Likelihood-Funktion

$$l\left(\Delta \tilde{f}_{fein}, \Delta \tilde{\Phi}_{fein}\right) = -\sum_{v=0}^{N-1} \left| w_v - \hat{a}_v \cdot e^{j\left(2\pi \Delta \tilde{f}_{fein} \cdot vT_s + \Delta \tilde{\Phi}_{fein}\right)} \right|^2$$

$$= const + 2 \cdot \text{Re}\left\{ \sum_{v=0}^{N-1} \underbrace{w_v \cdot \hat{a}_v^*}_{zeig_v} \cdot e^{-j\left(2\pi \Delta \tilde{f}_{fein} \cdot vT_s + \Delta \tilde{\Phi}_{fein}\right)} \right\} \tag{24}$$

Der in Gl.(24) definierte Zeiger

$$zeig_v = w_v \cdot \hat{a}_v^* \tag{25}$$

wird bei richtigem Frequenz- und Phasenschätzwert auf die Realteilachse zurückgedreht. Es empfiehlt sich, für die weitere Herleitung gemäß **Gl.(26)**

$$zeig_v = \left|zeig_v\right| \cdot e^{j\alpha_v} \tag{26}$$

die Polardarstellung zu verwenden. Durch Einsetzen in Gl.(24) erhält man

$$l\left(\Delta \tilde{f}_{fein}, \Delta \tilde{\Phi}_{fein}\right) = const + 2 \cdot \text{Re}\left\{ \sum_{v=0}^{N-1} \left|zeig_v\right| \cdot e^{j\left(\alpha_v - 2\pi \Delta \tilde{f}_{fein} \cdot vT_s - \Delta \tilde{\Phi}_{fein}\right)} \right\}$$

$$= const + 2 \cdot \sum_{v=0}^{N-1} \left|zeig_v\right| \cdot \cos\left(\alpha_v - 2\pi \Delta \tilde{f}_{fein} \cdot vT_s - \Delta \tilde{\Phi}_{fein}\right)$$

Im Bereich des Maximums ist das cos-Argument sehr klein und deshalb die Näherung

$$\cos(\xi) \approx 1 - \frac{\xi^2}{2}$$

zulässig. Man beachte daß die Phase $\alpha_v$ wegen der schon sehr guten NDA-Schätzung nur wenige Grad beträgt (siehe Fig.17) und damit können keine $2\pi$-Phasensprünge auftreten. Folglich muß im Gegensatz zum NDA-Verfahren auch keine ungewrappte Phase bei Anwendung dieser Näherung berechnet werden. Damit ergibt sich

$$l\left(\Delta \tilde{f}_{fein}, \Delta \tilde{\Phi}_{fein}\right) = const + 2 \cdot \sum_{v=0}^{N-1} \left|zeig_v\right| \cdot \left[ 1 - \frac{\left(\alpha_v - 2\pi \Delta \tilde{f}_{fein} \cdot vT_s - \Delta \tilde{\Phi}_{fein}\right)^2}{2} \right]$$

Um das Maximum dieses Ausdruckes zu bestimmen, berechnet man zunächst die partiellen Ableitungen nach $\Delta \tilde{f}_{fein}$ sowie $\Delta \tilde{\Phi}_{fein}$ und setzt diese gleich Null:

$$\frac{\delta}{\delta\Delta\hat{f}_{fein}} l\left(\Delta\hat{f}_{fein}, \Delta\hat{\Phi}_{fein}\right) = 2\cdot\sum_{v=0}^{N-1}\left|zeig_v\right|\cdot\left[\alpha_v - 2\pi\,\Delta\hat{f}_{fein}\cdot vT_s - \Delta\hat{\Phi}_{fein}\right]\cdot 2\pi vT_s \overset{!}{=} 0$$

$$\frac{\delta}{\delta\Delta\hat{\Phi}_{fein}} l\left(\Delta\hat{f}_{fein}, \Delta\hat{\Phi}_{fein}\right) = 2\cdot\sum_{v=0}^{N-1}\left|zeig_v\right|\cdot\left[\alpha_v - 2\pi\,\Delta\hat{f}_{fein}\cdot vT_s - \Delta\hat{\Phi}_{fein}\right] \overset{!}{=} 0$$

In matrizieller Form ausgedrückt ergibt sich das Gleichungssystem

$$\underbrace{\begin{bmatrix} \sum_{v=0}^{N-1}\left|zeig_v\right|\cdot v^2 T_s & \sum_{v=0}^{N-1}\left|zeig_v\right|\cdot v \\ \sum_{v=0}^{N-1}\left|zeig_v\right|\cdot v & \sum_{v=0}^{N-1}\left|zeig_v\right| \end{bmatrix}}_{\mathbf{A}} \cdot \begin{bmatrix} 2\pi\Delta\hat{f}_{fein} \\ \Delta\hat{\Phi}_{fein} \end{bmatrix} = \underbrace{\begin{bmatrix} \sum_{v=0}^{N-1}\left|zeig_v\right|\cdot\alpha_v\cdot v \\ \sum_{v=0}^{N-1}\left|zeig_v\right|\cdot\alpha_v \end{bmatrix}}_{\mathbf{b}}$$

Durch Auflösung nach dem Phasen- und Frequenzversatz erhält man die gesuchte Lösung in **Gl.(27)**

$$\begin{bmatrix} 2\pi\Delta\hat{f}_{fein} \\ \Delta\hat{\Phi}_{fein} \end{bmatrix} = \mathbf{A}^{-1}\cdot\mathbf{b} \tag{27}$$

In Fig. 19 wird das Blockschaltbild des DA-Vefahrens gezeigt.

**Patentansprüche**

1.  Verfahren zur Demodulation von MQAM-Signalen ohne Kenntnis der übertragenen Symbole durch Abtasten des Basisbandsignals mit einer dem MQAM-Signal entsprechenden Taktfrequenz, bei dem zur Taktsynchronisation der Taktphasenfehler berechnet und damit die entsprechende zeitliche Verschiebung des Basisbandsignals durch Interpolation kompensiert wird,
    **dadurch gekennzeichnet, daß**
    anschließend nach dem Prinzip der Maximum-Likelihood-Theorie unter Anwendung der Fouriertransformation oder durch Faltung im Zeitbereich die Trägerfrequenzabweichung und die Trägerphasenabweichung rückkopplungsfrei berechnet und damit dann die Datenfolge kompensiert wird.

2.  Verfahren nach Anspruch 1, **dadurch gekennzeichnet , dass** anschließend an die Taktsynchronisation das Verhältnis von berechnetem Mittelwert der zu den Symbolzeitpunkten abgetasteten Symbolbetragswerte zum statistischen Mittelwert der Symbolbetragswerte der MQAM-Modulation als Dynamikfehler-Vorschätzung berechnet und anschließend zur Dynamikkompensation der abgetasteten Datenfolge verwendet wird.

3.  Verfahren nach Anspruch 2, **dadurch gekennzeichnet, dass** nach der Dynamikvorschätzung durch Korrelation der relativen Häufigkeit der abgetasteten Symbolbetragswerte mit der statistischen Verteilungsdichtefunktion der Symbolbeträge nach dem Prinzip der Maximum-Likelihood -Theorie eine Dynamik-Grobschätzung, der Datenfolge durchgeführt wird.

4.  Verfahren nach Anspruch 3, **dadurch gekennzeichnet, dass** nach der Dynamik-Grobschätzung wiederum mit Hilfe der Maximum-Likelihood-Theorie eine Dynamik-Feinschätzung durchgeführt wird.

5.  Verfahren nach einem der vorhergehenden Ansprüche, **dadurch gekennzeichnet, dass** die bezüglich Taktphase und Dynamik kompensierte Datenfolge nach Umwandlung in Polarkoordinatendarstellung durch Multiplikation mit in einer Tabelle abgespeicherten Fourierkoeffizienten der sich aus der Maximum-Likelihood-Theorie ergebenden Nichtlinearität in eine neue Datenfolge umgerechnet wird,

aus dieser neuen Folgen durch Fouriertransformation, Potenzieren des Betrages dieser Fouriertransformation und anschließende inverse Fouriertransformation ein Summenwert gebildet wird, aus dem nach Umwandlung in Polarkoordinatendarstellung die Phase ohne $2\pi$-Phasensprünge berechnet wird,

und aus dieser so berechneten Phase dann der Frequenzversatz $\Delta f$ und der Phasenversatz $\Delta \phi$ berechnet wird, mit denen dann die Datenfolge kompensiert wird.

**6.** Verfahren nach einem der vorhergehenden Ansprüche, **dadurch gekennzeichnet, dass** anschließend an die Taktphasen-, Dynamik-, Frequenz- und Phasenkompensation die Eingangsfolge durch konjugiert komplexe Multiplikation mit der geschätzten Symbolfolge in Richtung Ursprung zurückgedreht wird, dann in Polarkoordinatendarstellung umgewandelt wird und damit nach Lösen eines nachfolgenden Gleichungssystems Feinschätzwerte für die Trägerfrequenz- und Trägerphasenabweichung gewonnen werden, mit denen dann die Datenfolge feinkompensiert wird.

## Claims

**1.** Method of demodulating MQAM signals without knowledge of the transmitted symbols by sampling the baseband signal with a clock frequency corresponding to the MQAM signal, in which, for the purpose of clock synchronization, the clock-phase error is calculated and the corresponding time shift of the baseband signal is compensated for therewith by interpolation, **characterized in that** the carrier-frequency deviation and the carrier-phase deviation is then calculated without feedback on the basis of the principle of maximum likelihood theory using Fourier transformation or by convolution in the time domain and the data sequence is then compensated for therewith.

**2.** Method according to Claim 1, **characterized in that**, subsequent to the clock synchronization, the ratio of the calculated mean of the symbol magnitude values sampled at the symbol time instants to the statistical mean of the symbol magnitude values of the MQAM modulation is calculated as a preliminary dynamic-range error estimate and is then used for the dynamic-range compensation of the sampled data sequence.

**3.** Method according to Claim 2, **characterized in that**, after the preliminary dynamic-range estimate, a coarse dynamic-range estimate of the data sequence is made by correlating the relative frequency of the sampled symbol magnitude values with the statistical distribution density function of the symbol magnitudes on the basis of the principle of the maximum likelihood theory.

**4.** Method according to Claim 3, **characterized in that**, after the coarse dynamic-range estimate, a fine dynamic-range estimate is in turn made with the aid of the maximum likelihood theory.

**5.** Method according to any of the preceding claims, **characterized in that** the data sequence compensated in respect of clock phase and dynamic range is converted into a new data sequence after conversion to polar co-ordinate representation by multiplying with Fourier coefficients, stored in a table, of the nonlinearity resulting from the maximum likelihood theory, a cumulative value is formed from which the phase is calculated without $2\pi$ phase changes after conversion to polar co-ordinate representation from said new sequence by Fourier transformation, exponentiation of the magnitude of said Fourier transformation and subsequent inverse Fourier transformation, and the frequency offset $\Delta f$ and the phase offset $\Delta \Phi$ with which the data sequence is then compensated is then calculated from said phase calculated in this way.

**6.** Method according to any of the preceding claims, **characterized in that**, following the clock-phase, dynamic-range, frequency and phase compensation, the input sequence is turned back in the direction of the origin by conjugated complex multiplication by the estimated symbol sequence, then converted to polar co-ordinate representation and, after solution of a subsequent equation system, fine estimated values for the carrier-frequency and carrier-phase deviation with which the data sequence is then fine-compensated are then obtained therewith.

## Revendications

**1.** Procédé pour démoduler des signaux M-QAM sans connaître les symboles transmis par échantillonnage du signal dans la bande de base avec une fréquence d'impulsion correspondant au signal M-QAM, pour lequel, afin de synchroniser les impulsions, l'erreur de phase d'impulsion est calculée et donc le déplacement temporel correspondant du signal dans la bande de base est compensé par interpolation,

**caractérisé en ce que** la variation de fréquence porteuse et la variation de la phase porteuse sont ensuite calculées sans rétroaction selon la théorie du maximum de vraisemblance en utilisant une transformée de Fourier ou par convolution dans le temps, et **en ce que** la séquence de données est ensuite compensée par ce moyen.

2. Procédé selon la revendication 1 **caractérisé en ce que**, suite à la synchronisation d'impulsion, le rapport de la moyenne calculée des valeurs échantillonnées de grandeur de symbole aux instants des symboles sur la moyenne statistique des valeurs de grandeur de symbole pour la modulation M-QAM est calculé en tant qu'estimation préalable des erreurs de dynamique puis la séquence de données échantillonnée est utilisée pour compenser la dynamique.

3. Procédé selon la revendication 2 **caractérisé en ce qu'**après l'estimation préalable de la dynamique par corrélation de la fréquence relative des valeurs de grandeur de symbole échantillonnées avec la fonction de la densité de répartition statistique des quantités de symbole selon la théorie du maximum de vraisemblance, on exécute une évaluation approximative de la dynamique de la séquence de données.

4. Procédé selon la revendication 3 **caractérisé en ce qu'**après l'évaluation approximative de la dynamique on réalise une évaluation précise de la dynamique, de nouveau à l'aide de la théorie du maximum de vraisemblance.

5. Procédé selon l'une des revendications précédentes **caractérisé en ce que** la séquence de données compensée en phase d'impulsions et en dynamique est convertie en une nouvelle séquence de données après transformation dans une représentation de coordonnées polaires par multiplication avec des coefficients de Fourier, enregistrés dans une table, d'une non-linéarité obtenue par la théorie du maximum de vraisemblance, par transformée de Fourier, par élévation à la puissance de la grandeur de cette transformée de Fourier puis par transformation de Fourier inverse, on forme à partir de cette nouvelle séquence une valeur cumulée à partir de laquelle on calcule la phase sans saut de phase de $2\pi$ après conversion dans une représentation de coordonnées polaires,

et à partir de cette phase ainsi calculée on calcule ensuite l'écart de fréquence $\Delta f$ et l'écart de phase $\Delta\varphi$ avec lesquels la séquence de données est ensuite compensée.

6. Procédé selon l'une des revendications précédentes **caractérisé en ce que**, suite à la compensation de phase d'impulsions, de dynamique, de fréquence et de phase, la séquence initiale est réorientée en direction d'origine par multiplication complexe conjointement avec la séquence de symboles estimée, puis est convertie en représentation de coordonnées polaires et donc on obtient, après résolution d'un système d'équations résultant, des valeurs d'évaluation précises pour les variations de fréquence porteuse et de phase porteuse avec lesquelles on compense précisément la séquence de données.

Fig. 1: Generierung eines QAM-Signals

**Fig. 2: Empfänger**

**Fig. 3: Modell der Übertragungsstrecke im äquivalenten Basisband**

**Fig. 4: Gesamtkonzept bei der Synchronisation von MQAM-Signalen**

Fig. 5: Zeigerdiagramm zur Einführung einer geeigneten Näherung

Fig. 6: Nichtlinearität bei der Berechnung der Likelihood-Funktion für eine 64QAM für $E_r/N_0 = 40$ dB

Fig. 7: Genäherte Log-Likelihood-Funktion nach Gl.(4) mit $T_{beab} = 512 \cdot T_s$, $E_s/N_0 = 40$ dB) einer 256QAM

Fig. 8: Histogrammbildung der Symbolbeträge

Fig. 9: Dynamikschätzung bei 256QAM

Fig. 10: Zur Berechnung des kontinuierlichen Phasenverlaufes

Fig. 11: Zur Berechnung des Summenausdrucks sum(μ   )

Fig. 12: Zur Berechnung der kontinuierlichen Phase

Fig. 13: Betragseinbrüche können bei der Berechnung der kontinuierlichen Phase „*cycle slips*" verursachen

Betrag von sum(u) bei 256QAM (normiert)

Phase von sum(u) bei 256QAM

Fig. 14: *sum*(μ) für *pot* = 2

Betrag von sum(u) bei 256QAM (normiert)

Phase von sum(u) bei 256QAM

Fig. 15: *sum*(μ) für *pot* = 5

Fig. 16: Frequenzversatzschätzung 256QAM für *pot* = 5
(gestrichelter Verlauf zeigt theoretische Grenzen)

Fig. 17: Phasenversatzschätzung 256QAM für *pot* = 5
(gestrichelter Verlauf zeigt theoretische Grenzen)

| Zuordnung Symbole - Fourierkoeffizienten | → | Summenbeträge und -phasen (mehrfache Faltung) | → | kontinuierliche Phase |
| Frequenzversatz detektieren | → | Frequenzversatz im Signal korrigieren | → | Phasenversatz schätzen |

**Fig. 18: Zusammenfassung vom NDA-Verfahren zur Träger- und Phasenschätzung**

**Fig. 19: DA-Verfahren zur Träger- und Phasenschätzung**